# EUROPÄISCHE PATENTSCHRIFT

(11) **EP 2 171 005 B1**
(45) Veröffentlichungstag und Bekanntmachung des Hinweises auf die Patenterteilung: **22.08.2018**
(21) Anmeldenummer: 08761350.1
(22) Anmeldetag: 25.06.2008
(51) Int. Cl.: C09D 4/06

(54) **BESCHICHTUNGSFORMULIERUNG MIT VERBESSERTER METALLHAFTUNG**
COATING FORMULATION WITH ENHANCED METAL ADHESION
FORMULATION DE REVÊTEMENT PRÉSENTANT UNE ADHÉRENCE AMÉLIORÉE AU MÉTAL

(30) Priorität: 20.07.2007 DE 102007034456
(43) Veröffentlichungstag der Anmeldung: 07.04.2010
(73) Patentinhaber: Evonik Röhm GmbH, 64293 Darmstadt (DE)
(72) Erfinder: SCHMITT, Günter, 64291 Darmstadt (DE); NEUGEBAUER, Peter, 65552 Limburg (DE); SCHOLL, Sybille, 63517 Rodenbach (DE); HEEB, Heike, 64569 Nauheim (DE); REINHARD, Peter, 63303 Dreieich-Dreieichenhain (DE); KÜHL, Gilbert, 63457 Hanau (DE)
(86) Internationale Anmeldenummer: PCT/EP2008/058048
(87) Internationale Veröffentlichungsnummer: WO 2009/013090

(56) Entgegenhaltungen:
- WO-A-2005/000975
- WO-A-2005/087875
- JP-A- 2 151 669
- US-A- 4 145 477

## Beschreibung

Die Erfindung betrifft eine Beschichtungsformulierung mit verbesserter Metallhaftung. Bautenfarben und -lacke verhindern den schnellen Verfall und halten Konstruktionen funktionsfähig. Für jedes Baumaterial, jeden Untergrund, jede Art der späteren Belastung bieten die Hersteller von Baufarben optimierte und abgestimmte, meist in Systemen zusammengefasste Beschichtungsstoffe.

JP 02 151669 A beschreibt eine Harzemulsion, die durch Emulsionspolymerisation von 0,1 - 30 % ethylenisch ungesättigter Karbonsauren und 99,9 - 70 % mit den ethylenisch ungesättigten copolymerisierbaren Monomeren, und einer wasserlöslichen Chelat-Verbindung aus einem Metall-Ion und einer flüchtigen chelatisierenden Verbindung, und einem Harz, das über eine hohe Wasseraufnahmefähigkeit verfügt, besteht. Die Mischung wird als Beschichtung verwendet.

WO A 2005/087875 beschreibt eine Harzmischung enthaltend eine ethylenische ungesättigte Monomerkomponente (z.B. Methyl(meth)acrylat, S. 4, P.11), eine polymere Komponente (z.B. Polymere aus (Meth)acrylatharz, "thermoplastic acrylic polymers", S 2-3) und einpolymerisierbare mehrfach funktionalisierte Carbonsäure oder Säure(meth)acrylat (z.B. Itaconsäure, Maleinsäure oder ß-CEA, S.3-4, P. 9). Dieses Dokument beschreibt nur PhotoInitiatoren und die Mischung wird als Beschichtung von Holz-Oberflächen verwendet.

WO 2005/000975 A beschreibt eine Beschichtungsformulierung aus ethylenischen ungesättigten (Meth)acrylat Monomeren, aus einem verschiedenen Polymere Komponenten und Peroxide Initiatoren . Die Mischung wird als Stahl-Beschichtung verwendet. Bei Stahl handelt es sich um einen Baustoff, der hochwertig und fast universell einsetzbar ist. Zudem macht er bestimmte Baukonstruktionen erst möglich. Weit spannende Brücken, Masten und chemische Anlagen werden aus unlegiertem bis niedrig legiertem Stahl errichtet. Stahl dieser Klasse weist eine problematische Eigenschaft auf: Bei gleichzeitiger Anwesenheit von Luftsauerstoff und Feuchtigkeit korrodiert er. Dabei wandelt sich das durch den Verhüttungsprozess gewonnene energiereiche Eisenmetall wiederum in seine natürliche und energiearme Oxidform, den Rost. Das Stahlbauteil verliert allmählich an Substanz. Somit werden Standsicherheit oder Tragfähigkeit gefährdet.

Korrosionsschutzsysteme bestehen aus mehreren aufeinander abgestimmten Teilbeschichtungen, die zusammen eine Barriere gegen Sauerstoff und Feuchtigkeit bilden. Auf die Grundbeschichtung, deren Bindemittel vornehmlich aus Alkyd- oder Epoxidharzen bestehen, folgt die Zwischenbeschichtung zur Verbesserung der Barrierefunktion. Die Deckbeschichtung sorgt zum einen für Weterbeständigkeit, zum anderen für die optische Qualität, also für Farbigkeit und Glanz. Alkydharze und hochwertige Polyurethan-Bindemittel auf Basis von Acrylharzen und aliphatischen Polyisocyanathärtern stellen heute die wichtigsten Bindemittel dar.

Ein Problem bei der Beschichtung von Baumaterialien stellt die Haftung der Korrosionsschutzsysteme auf den verschiedenen Materialien dar. Nur durch einen vollflächigen Materialverbund von Baumaterial und Beschichtung kann die Korrosionsinhibierung erfolgen. Zudem verspröden Schutzsysteme durch Umwelteinflüsse und fallen dann durch geringste mechanische Beanspruchung ab. Damit kommt es zumeist zu kleinen Fehlstellen in der Beschichtung, in denen sehr schnell der korrosive Abbau des darunter liegenden Materials beginnt. Bei Objekten, deren Standsicherheit bzw. Tragkraft von entscheidender Bedeutung sind, muß daher ein Personal- und Kostenintensiver Überwachungsprozeß etabliert werden. Mit regelmäßigen Kontrollgängen müssen beispielsweise Brückenbauten auf eventuelle Korrosionsschäden überprüft werden.

Oft wird die Beschichtung on-site während der Konstruktionsphase aufgetragen. Bevorzugt werden jedoch in-shop Auftragungen, da diese unter kontrollierten Bedingungen erfolgen können. Bei einer langsamen Trocknung ergibt sich aber eine unpraktikable Durchlaufzeit, denn die Bauteile können bis zur vollständigen Trocknung nicht bewegt werden.

Es bestand die Aufgabe, eine verbesserte Beschichtungsformulierung gemäß der Ansprüche 1 bis 7 zur Verfügung zu stellen, die gute Haftungseigenschaften insbesondere auf Metalloberflächen aufweist.

Es bestand zudem die Aufgabe, ein Verfahren zu dessen Herstellung gemäß der Ansprüche 8 bis 10 und die Verwendung zur Beschichtung von Metalloberflächen gemäß Anspruch 11 zur Verfügung zu stellen.

Die Aufgabe wurde gelöst, durch Beschichtungsformulierungen für Metalle enthaltend ein Harz-System mit mindestens einer ethylenisch ungesättigten Monomerkomponente, dadurch gekennzeichnet, dass mindestens eine polymere Komponente mit einem Säure(meth)acrylat oder einpolymerisierbare mehrfach funktionalisierte Carbonsäuren ausgewählt aus der Gruppe der Dicarbonsäuren sowie AZO Initiatoren oder organische Peroxide enthalten sind, wobei die Monomerkomponente aus der Gruppe der Methyl(meth)acrylate, Ethyl(meth)acrylate, n-Butyl(meth)acrylate, Isobutyl(meth)acrylate, t-Butyl(meth)acrylate, 2-Hydroxyethyl(meth)acrylate, 2-Hydroxypropyl(meth)acrylate und/oder 2-Ethylhexyl(meth)acrylate ausgewählt ist, und wobei die polymere Komponente aus einem Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat besteht.

Überraschend wurde gefunden, dass die neue Beschichtungsformulierung hervorragende Haftungseigenschaften an metallischen Oberflächen, insbesondere an Stahl aufweist.

Die erfindungsgemäßen Beschichtungen können sowohl on-site, als auch in-shop eingesetzt werden.

Es wurde gefunden, dass die Beschichtungsformulierungen sehr schnell trocknen. Es werden Trocknungszeiten von ca. 1 Stunde erreicht. Durch die weitere Zugabe von Härtern kann die Trocknungs-/Härtungszeit weiter herabgesetzt werden. Somit kann die bevorzugte in-shop Anwendung in akzeptablen Durchlaufzeiten erfolgen.

Außerdem wurde gefunden, dass die schnell trocknenden/härtenden und gut haftenden Beschichtungsformulierungen auch für dicke Beschichtungsfilme, beispielsweise 1-5 mm, hervorragend geeignet sind.

Als Vernetzer werden insbesondere mehrfunktionelle Methacrylate wie Allylmethacrylat, Ethylenglykcol-dimethacrylat, Diethylenglykol-dimethacrylat, Triethylenglykol-dimethacrylat, Tetraethylen-glykol-dimethacrylat, Polyethylenglykoldimethacrylat, 1,3-Butandiol-dimethacrylat, 1,4-Butandiol-dimethacrylat, 1,6-Hexandiol-dimethacrylat, 1,12-Dodecandiol-dimethacrylat, Glycerol-dimethacrylat, Trimethylolpropan-trimethacrylat, eingesetzt.

Harzsysteme zur Beschichtung von Metalloberflächen sind bekannt.

Vorzugsweise enthält das Beschichtungsharz mindestens ein thermoplastisches Polymer kombiniert mit niedermolekularen Monomeren oder Oligomeren mit ethylenisch ungesättigten Doppelbindungen, beispielsweise als alpha-beta ethylenisch ungesättigte Carboxylatestergruppen wie z.B. Methacrylat- oder Acrylatgruppen.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Ein thermoplastisches Polymer ist vorzugsweise ein (Meth)acrylatharz, als Homopolymer, Copolymer und/oder Terpolymer. Eine Polymerkomponente kann besonders bevorzugt ein (Meth)acrylatpolymer sein. Dies kann über die Polymerisation von einem oder mehreren Methacrylat- oder Acrylatmonomeren dargestellt werden, vorzugsweise aus der Gruppe der Methyl(meth)acrylate, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat. Coreagenzien können Styrol oder Vinyltoluole sein. Ein besonders bevorzugtes thermoplastisches Polymer ist ein Copolymer aus Butylmethacrylat und Methylmethacrylat.

Eine ethylenisch ungesättigte Monomerkomponente ist ausgewählt aus der Gruppe Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat.

Eine andere Klasse der thermoplastischen Polymerharze beinhaltet Homopolymere, Copolymere oder Terpolymere aus Vinylmonomeren wie beispielsweise Styrol, Vinyltoluol, Vinylchlorid, Vinylacetat, Vinylidenchlorid und/oder Vinylester Coreagenzien könne Diene sein, wie z.B. Butadien.

Die thermoplastischen Harze bilden 10-60 Gew.-% der Harzkomponente der Beschichtungsmischung.

Die polymere Komponente enthält Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat.

Eine polymere Komponente kann auch ein Reaktionsprodukt aus einem oder mehreren Dienen mit mindestens einem Styrol, Vinyltoluol, Vinylchlorid, Vinylacetat, Vinylidenchlorid und/oder Vinylester sein.

Mindestens eine der flüssigen Monomerkomponenten enthält Methacrylatfunktionalitäten, besonders bevorzugt Methacrylsäureester. Gegebenenfalls kann auch eine Acrylatfunktionalität enthalten sein, bevorzugt Acrylsäureester.

Außerdem ist eine Monomerkomponente monofunktionell, damit das Reaktionsprodukt mit einem organischen Peroxid thermoplastisch ist, schmilzt und fließt bis zur Reaktionstemperatur der Zusatzstoffe.

Eine ethylenisch ungesättigte Monomerkomponente wird ausgewählt aus der Gruppe der Methyl(meth)acrylate, Ethyl(meth)acrylate, n-Butyl(meth)acrylate, Isobutyl(meth)acrylate, tert-Butyl(meth)acrylate, 2-Hydroxyethyl(meth)acrylat, 2-Hydroxypropyl(meth)acrylat und/oder 2-Ethylhexyl(meth)acrylate und deren Mischungen. Methylmethacrylat und 2-Ethylhexylacrylat sind besonders bevorzugt.

Die flüssige Monomerkomponente bildet 30-60 Gew.-% der Harzkomponente der Beschichtungsmischung.

Die Harzkomponente bildet 10-60 Gew.-%, besonders bevorzugt 25-50 Gew.-% der Beschichtungsmischung.

Es werden Initiatoren eingesetzt, um die flüssige Beschichtungsformulierung auszuhärten. Es werden AZO-Initiatoren oder organische Peroxide verwendet. Bevorzugt werden als Initiatoren Dialkylperoxide, Ketoperoxide, Peroxyester, Diacylperoxide, Hydroperoxide und/oder Peroxiketale verwendet. Der Initiator wird in Mengen von 0,5 bis 5%, besonders bevorzugt 1-4% zur gesamten Harzzusammensetzung eingesetzt.

Bei der Verwendung von Dibenzolperoxid als Initiator wird vorzugsweise ein tertiäres Amin zugegeben, um die Aushärtung zu beschleunigen. Bevorzugte tertiäre Amine sind N,N-Dimethylaniline und N,N-Dialkyl-p-toluidine.

Der Anteil der tertiären Amine an der gesamten Harzmischung liegt bei 0,1-4%, bevorzugt bei 0,25-3%.

Bevorzugte Azo-Initiatoren sind 2,2-Azobis(amidinopropan)dihydrochlorid, 2,2-Azobis(2-methylbutyronitril), 2,2-Azobis(2-methylpropannitril), 2,2-Azobis(2,4-dimethylpentanitril) und deren Mischungen.

Eine wesentliche Verbesserung der Haftungseigenschaften der Beschichtung auf Metalloberflächen wird durch die Zugabe von Säure(meth)acrylaten oder einpolymerisierbaren mehrfach funktionalisierten Carbonsäuren erreicht. Die Säure(meth)acrylate werden vorzugsweise ausgewählt ist aus der Gruppe der Dicarbonsäuren, besonders bevorzugt wird β-CEA verwendet. Die einpolymerisierbaren mehrfach funktionalisierten Carbonsäuren werden besonders bevorzugt aus der Gruppe der Itaconsäuren, Fumarsäuren, Maleinsäuren ausgewählt.

Beta-CEA ist das Michael-Produkt der Acrylsäure und ist immer eine Mischung aus: 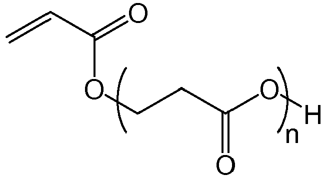 beta-Carboxyethylacrylat
mit n= 1-20

Die Säure(meth)acrylate bzw. einpolymerisierbaren mehrfach funktionalisierten Carbonsäuren sind bevorzugt Bestandteil der polymeren Komponente des Harzes.

Diese Säure(meth)acrylate bewirken zusätzlich eine gute Dispergierwirkung auf die verwendeten Farbbestandteile.

Gelöst wurde die Aufgabe auch durch ein Verfahren zur Herstellung von Beschichtungsformulierungen. Das erfindungsgemäße Verfahren ist dadurch gekennzeichnet, dass mindestens eine ethylenisch ungesättigte Monomerkomponente und mindestens eine polymere Komponente mit einem Säure(meth)acrylat aus der Gruppe der Dicarbonsäuren oder einpolymerisierbaren mehrfach funktionalisierten Carbonsäuren und die üblichen Hilfs- und Zusatzstoffe mittels freier radikalischer Polymerisation polymerisiert werden.

Thixotrope Additive können zur Verbesserung der Rheologie zugegeben werden, um dicke Beschichtungen in einem Auftragungsschritt zu ermöglichen. Sie werden in Mengen von 0-2%, bevorzugt 0,05-1%, bezogen auf die Gesamtmenge der Beschichtung zugegeben.

Ebenso können Benetzungs- oder Dispersionsadditive zugegeben werden.

Vor der Auftragung der Beschichtung auf die metallische Oberfläche wird das organische Peroxid zugegeben. Damit wird die radikalische Reaktion gestartet, bei der die flüssige Beschichtung aushärtet. Üblicherweise beträgt die Aushärtungszeit 30 Minuten. Dies kann durch die Menge an Initiator und Beschleuniger variiert werden.

Die Beschichtungsformulierung kann mittels Sprühtechnik, Pinsel, Rolle, Spatel oder Tauchverfahren aufgebracht werden. Alternativ kann auch ein Mehrkomponenten-Sprühsystem verwendet werden.

Die Metalloberfläche wird üblicherweise vor dem Auftragen der Beschichtung gereinigt, um Verarbeitungsrückstände u.ä. zu entfernen. Teilweise werden auch Primer aufgetragen.

Ebenso kann ein Decklack aufgetragen werden, beispielsweise für exponierte Metalloberflächen.

## Patentansprüche

1. Beschichtungsformulierung für Metalle enthaltend ein Harz-System mit mindestens einer ethylenisch ungesättigten Monomerkomponente, **dadurch gekennzeichnet, dass** mindestens eine polymere Komponente mit einem Säure(meth)acrylat oder einpolymerisierbare mehrfach funktionalisierte Carbonsäuren ausgewählt aus der Gruppe der Dicarbonsäuren sowie AZO-Initiatoren oder organische Peroxide enthalten sind, wobei die Monomerkomponente aus der Gruppe der Methyl(meth)acrylate, Ethyl(meth)acrylate, n-Butyl(meth)acrylate, Isobutyl(meth)acrylate, t-Butyl(meth)acrylate, 2-Hydroxyethyl(meth)acrylate, 2-Hydroxypropyl(meth)acrylate und/oder 2-Ethylhexyl(meth)acrylate ausgewählt ist, und wobei die polymere Komponente aus einem Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat besteht.

2. Beschichtungsformulierung nach Anspruch 1, **dadurch gekennzeichnet, dass** das Säure(meth)acrylat ausgewählt ist aus der Gruppe der beta-CEA.

3. Beschichtungsformulierung nach Anspruch 1, **dadurch gekennzeichnet, dass** die einpolymerisierbare mehrfach funktionalisierte Carbonsäure ausgewählt ist aus der Gruppe der Itaconsäuren, Fumarsäuren, Maleinsäuren.

4. Beschichtungsformulierung nach Anspruch 1, **dadurch gekennzeichnet, dass** eine polymere Komponente ausgewählt ist aus der Gruppe der thermoplastischen Harze.

5. Beschichtungsformulierung nach Anspruch 3, **dadurch gekennzeichnet, dass** eine polymere Komponente ausgewählt ist aus der Gruppe der Homopolymeren, Copolymeren und/oder Terpolymeren eines (Meth)acrylharzes.

6. Beschichtungsformulierung nach Anspruch 1, **dadurch gekennzeichnet, dass** eine polymere Komponente ein (Meth)acrylat-Copolymer enthält.

7. Beschichtungsformulierung nach Anspruch 1, **dadurch gekennzeichnet, dass** eine polymere Komponente ein Reaktionsprodukt aus einem oder mehreren Dienen mit einem Styrol, Vinyltoluol, Vinylchlorid, Vinylacetat, Vinylidenchlorid und/oder Vinylester sein kann.

8. Verfahren zur Herstellung einer Beschichtungsformulierung nach Anspruch 1, **dadurch gekennzeichnet, dass** mindestens eine ethylenisch ungesättigte Monomerkomponente und mindestens eine polymere Komponente mit einem Säure(meth)acrylat oder einpolymerisierbare mehrfach funktionalisierte Carbonsäuren aus der Gruppe der Dicarbonsäuren und die üblichen Hilfs- und Zusatzstoffe mittels freier radikalischer Polymerisation polymerisiert werden.

9. Verfahren zur Herstellung einer Beschichtungsformulierung nach Anspruch 8, **dadurch gekennzeichnet, dass** als Hilfs- und Zusatzstoffe Initiatoren, vorzugsweise, organische Peroxide, verwendet werden.

10. Verfahren zur Herstellung einer Beschichtungsformulierung nach Anspruch 9, **dadurch gekennzeichnet, dass** als Initiatoren Dialkylperoxide, Ketoperoxide, Peroxyester, Diacylperoxide, Hydroperoxide und/oder Peroxiketale verwendet werden.

11. Verwendung der Beschichtungsformulierung nach Anspruch 1, zur Beschichtung von Metalloberflächen.

## Claims

1. Coating formulation for metals comprising a resin system with at least one ethylenically unsaturated monomer component, **characterized in that** there are at least one polymeric component with an acid (meth)acrylate or polymerizable, multiply functionalized carboxylic acids selected from the group of the dicarboxylic acids and AZO initiators or organic peroxides, wherein the monomer component is selected from the group of the methyl (meth)acrylates, ethyl (meth)acrylates, n-butyl (meth)acrylates, isobutyl (meth)acrylates, tert-butyl (meth)acrylates, 2-hydroxyethyl (meth)-acrylates, 2-hydroxypropyl (meth)acrylates and/or 2-ethylhexyl (meth)acrylates, and wherein the polymeric component is composed of a methyl (meth)acrylate, ethyl (meth)acrylate, n-butyl (meth)acrylate, isobutyl (meth)acrylate, tert-butyl (meth)acrylate, 2-hydroxyethyl (meth)-acrylate, 2-hydroxypropyl (meth)acrylate and/or 2-ethylhexyl (meth)acrylate.

2. Coating formulation according to Claim 1, **characterized in that** the acid (meth)acrylate is selected from the group of beta-CEA.

3. Coating formulation according to Claim 1, **characterized in that** the copolymerizable, multiply functionalized carboxylic acid is selected from the group of the itaconic acids, fumaric acids and maleic acids.

4. Coating formulation according to Claim 1, **characterized in that** one polymeric component is selected from the group of thermoplastic resins.

5. Coating formulation according to Claim 3, **characterized in that** one polymeric component is selected from the group of homopolymers, copolymers and/or terpolymers of a (meth)acrylic resin.

6. Coating formulation according to Claim 1, **characterized in that** one polymeric component comprises a (meth)acrylate copolymer.

7. Coating formulation according to Claim 1, **characterized in that** one polymeric component can be a reaction product of one or more dienes with styrene, vinyltoluene, vinyl chloride, vinyl acetate, vinylidene chloride and/or vinyl ester.

8. Process for producing a coating formulation according to Claim 1, **characterized in that** at least one ethylenically unsaturated monomer component and at least one polymeric component with an acid (meth)acrylate or copolymerizable, multiply functionalized carboxylic acids from the group of the dicarboxylic acids and the typical auxiliaries and additives are polymerized by means of free radical polymerization.

9. Process for producing a coating formulation according to Claim 8, **characterized in that** auxiliaries and additives used are initiators, preferably organic peroxides.

10. Process for producing a coating formulation according to Claim 9, **characterized in that** initiators used are dialkyl peroxides, keto peroxides, peroxy esters, diacyl peroxides, hydroperoxides and/or peroxy ketals.

11. Use of the coating formulation according to Claim 1 for coating metal surfaces.

## Revendications

1. Formulation de revêtement pour métaux contenant un système de résine comprenant au moins un composant monomère éthyléniquement insaturé, **caractérisée en ce qu'**au moins un composant polymère avec un (méth)acrylate d'acide ou des acides carboxyliques polyfonctionnalisés copolymérisables choisis dans le groupe constitué par les acides dicarboxyliques, ainsi que des initiateurs AZO ou des peroxydes organiques sont contenus, le composant monomère étant choisi dans le groupe constitué par les (méth)acrylates de méthyle, les (méth)acrylates d'éthyle, les (méth)acrylates de n-butyle, les (méth)acrylates d'isobutyle, les (méth)acrylates de t-butyle, les (méth)acrylates de 2-hydroxyéthyle, les (méth)acrylates de 2-hydroxypropyle et/ou les (méth)acrylates de 2-éthylhexyle, et le composant polymère étant constitué par un (méth)acrylate de méthyle, un (méth)acrylate d'éthyle, un (méth)acrylate de n-butyle, un (méth)acrylate d'isobutyle, un (méth)acrylate de t-butyle, un (méth)acrylate de 2-hydroxyéthyle, un (méth)acrylate de 2-hydroxypropyle et/ou un (méth)acrylate de 2-éthylhexyle.

2. Formulation de revêtement selon la revendication 1, **caractérisée en ce que** le (méth)acrylate d'acide est choisi dans le groupe du bêta-CEA.

3. Formulation de revêtement selon la revendication 1, **caractérisée en ce que** l'acide carboxylique polyfonctionnalisé copolymérisable est choisi dans le groupe constitué par les acides itaconiques, les acides fumariques, les acides maléiques.

4. Formulation de revêtement selon la revendication 1, **caractérisée en ce qu'**un composant polymère est choisi dans le groupe des résines thermoplastiques.

5. Formulation de revêtement selon la revendication 3, **caractérisée en ce qu'**un composant polymère est choisi dans le groupe des homopolymères, des copolymères et/ou des terpolymères d'une résine (méth)acrylique.

6. Formulation de revêtement selon la revendication 1, **caractérisée en ce qu'**un composant polymère contient un copolymère de (méth)acrylate.

7. Formulation de revêtement selon la revendication 1, **caractérisée en ce qu'**un composant polymère peut être un produit de réaction d'un ou de plusieurs diènes avec un styrène, un vinyltoluène, un chlorure de vinyle, un acétate de vinyle, un chlorure de vinylidène et/ou un ester de vinyle.

8. Procédé de fabrication d'une formulation de revêtement selon la revendication 1, **caractérisé en ce qu'**au moins un composant monomère éthyléniquement insaturé et au moins un composant polymère sont polymérisés avec un (méth)acrylate d'acide ou des acides carboxyliques polyfonctionnalisés copolymérisables du groupe des acides dicarboxyliques et les adjuvants et additifs usuels par polymérisation radicalaire libre.

9. Procédé de fabrication d'une formulation de revêtement selon la revendication 8, **caractérisé en ce que** des initiateurs, de préférence des peroxydes organiques, sont utilisés en tant qu'adjuvants et additifs.

10. Procédé de fabrication d'une formulation de revêtement selon la revendication 9, **caractérisé en ce que** des peroxydes de dialkyle, des cétoperoxydes, des peroxyesters, des peroxydes de diacyle, des hydroperoxydes et/ou des peroxycétals sont utilisés en tant qu'initiateurs.

11. Utilisation de la formulation de revêtement selon la revendication 1 pour le revêtement de surfaces métalliques.
